# EUROPEAN PATENT SPECIFICATION

(11) **EP 3 302 861 B1**
(45) Date of publication and mention of the grant of the patent: **01.07.2020**
(21) Application number: 16725493.7
(22) Date of filing: 24.05.2016
(51) Int. Cl.: B23D 61/18, B23D 65/00, B28D 1/12, D07B 7/16

(54) **SAW CORD LOOP AND A METHOD FOR PRODUCING SUCH A LOOP**
DRAHTSÄGESCHLEIFE UND VERFAHREN ZUR HERSTELLUNG SOLCH EINER SCHLEIFE
BOUCLE DE SCIE À CÂBLE ET PROCÉDÉ DE FABRICATION D'UNE TELLE BOUCLE

(30) Priority: 26.05.2015 EP 15169236
(43) Date of publication of application: 11.04.2018
(73) Proprietor: NV Bekaert SA, 8550 Zwevegem (BE)
(72) Inventor: DERYCKE, Steven, 9880 Aalter (BE); LEFEBVRE, Dominique, 8582 Outrijve (BE); BAEKELANDT, Tom, 9052 Zwijnaarde (BE); GOEMAERE, Peter, 8550 Zwevegem (BE)
(74) Representative: Seynhaeve, Geert Filiep
(86) International application number: PCT/EP2016/061634
(87) International publication number: WO 2016/188978

(56) References cited:
- WO-A1-2012/142633
- WO-A1-2013/110360
- US-A- 2 083 369
- US-A- 3 356 397
- US-A- 3 754 845

## Description

### Technical Field

The invention relates to a method to close the loop of a saw cord, in particular to a method for producing a saw cord loop according to the preamble of claim 1, and a saw cord according to the preamble of claim 12. Saw cords are used for cutting stony materials of natural origin (like marble and granite) or man-made origin (like brick or concrete).

### Background Art

Such a method and such a saw cord are known from WO2012/142633A1.

A saw cord is a steel cord provided with saw beads threaded on the steel cord, that are spaced apart by a polymer coating. Typically the steel cord is a multi-strand steel cord comprising a core strand and outer strands twisted around the core strand.

The saw cord is closed into a loop by means of a closure. Saw cords were first used in quarries for block extraction where a single, long loop was formed by means of a mechanical closure. As the loop is long the closure is not bent at high frequency. Further, as the cord has to be shortened at regular times as the sawing progresses, the connection in this kind of application is regularly renewed.

Saw cords are now increasingly being used on multi-loop saw machines comprising several tens (for example sixty) saw cord loops running in parallel over driven pulley pairs. When a single loop fractures, the whole machine is down as the free ends can entangle into the still running loops. On multi-wire saws it is a prerequisite that the steel cord and its connection must last at least as long as the beads hence the connection must be at least as performant as the cable.

Additionally, the steel cord loop must be closed with torsions in it. At the closure of the loop one of the two facing ends must be twisted around its axis while the other end is held rotationally fixed. The twisting must be in the closing direction of the steel cord i.e. the direction that shortens the lay length of the outer strands in the steel cord. This makes the saw cord stiffer in torsion. Additionally, a pulley under angle is present in the saw cord path to make the saw cord rotate in the closing direction of the cord. This ensures that the saw cord will rotate during use thereby generating an even circumferential wear of the beads.

It is clear that the connection should not deteriorate the useful life of the beads or the steel cord. In any case the connection is a discontinuity over the length of the loop and the following difficulties may arise at the connection:

First, if the connection is torsionally less stiff then the rope itself, the beads in the connection will rotate less leading to ovalisation of the beads. This ovalisation may spread outside of the connection and even over the complete length of the loop. 'Ovalisation of the beads' is the process whereby the wear of the abrasive layer on the bead is not circumferentially uniform. It is a self-amplifying process in that once a slight ovalisation occurs the saw cord is hampered in its rotation and the side of the beads that is most worn will contact the stony material even more. Those beads will therefore wear faster at one side resulting in a need to discard the whole loop.

Secondly, if in the region of the connection there is a higher or lower bending stiffness of the saw cord in comparison with the regions outside of the connection, the beads of the connection zone will enter the cut differently than in the other parts of the saw cord. Also as a local high bending stiffness introduces high bending stresses and the steel cord may fail due to the repeated bending.

Thirdly, the breaking load of the cord should not deteriorate too much at the connection.

Fourthly, the diameter of the steel cord at the connection should not increase or at least not increase too much. It should remain possible to shift the beads over the connection before injection of the polymer sleeves.

Finally, the closing of the connection should not take too much time, in order to be able to produce saw cord loops in a cost effective way.

Methods have been suggested to produce the steel cord loop starting from a single strand wound on itself with only one connection of a single strand (GB 623685 (1947) US2773495 (1953)). Although by far this must be the best possible connection it is a lengthy process to make the loop. Further, the beads must be shifted back and forth over the loop many times and it is difficult to build in torsions.

Other connections for saw cords have been suggested that are largely based on the methods used to splice steel wire ropes e.g. steel wire ropes for cableways. The 'internal splice' wherein the outer strands on turn are tucked into the core is in that respect very popular. The DIN3089 (1984) - Part 2 standard describes this kind of splice. The 'internal splice' shows a bending stiffness and torsional stiffness that is very close to that of the steel cord. Also there is very little diameter increase at the places where strands are tucked in. There remains a local loss of breaking load as the core strand and outer strands are all disconnected at some point. However, if these points are sufficiently far away from one another the loss can be minimised. The drawback of the internal splice is that it is elaborate and time consuming.

An alternative splice that can be made in less time is an 'external splice'. Here the outer strands are not tucked into the core to replace the core strand but they remain external to the core and the abutments of corresponding strands remain visible from the outside. See for example US 3884212 and US 4907564. The advantage is that the splice can be made in a shorter time. However, the splice has to extend over a longer length in order to obtain the same strength. Further, upon load (tension, bending or torsion) the strand tips at the abutments will tend to protrude from the steel cords surface thereby hindering the shifting of the beads over the abutments prior to injection moulding.

Variations to the external splice are for example described in WO2012/142633 A1 wherein the abutting tips of the outer strands are held in a heat shrinkable sleeve or tube. Afterwards the strand is pushed in between the neighbouring strands with pliers. Although this prevents the strand tips from protruding from the surface, the mechanical problems remain.

An alternative external splice has been described in WO 2015/028950 wherein at each abutment of strand tips a reinforcing element enclosing the steel cord is put over the abutment. While the connection ensures an adequate strength and torsion stiffness, it may introduce high local bending stresses at the edge of the reinforcing element. The method makes it necessary to put the reinforcing element over the steel cord just prior to the injection moulding as, once the element is in place, the beads cannot longer be shifted over the splice.

The inventors therefore sought other ways to close the loop of the steel cord in a saw cord.

### Disclosure of Invention

It is a first object of the invention to provide for a method to close the steel cord of a saw cord into a loop by means of a splice. It is a further object of the invention to limit the time needed to make the splice connecting the steel cord into a loop. It is also an object of the invention that the splice can be made over a short splice length. An important object is that the beads can be shifted over the splice without obstruction prior to injection moulding. The ultimate goal is to be able to automate the injection moulding of the polymer jacket by providing a suitable splice. Another object of the invention is to provide a wire saw loop with a splice of which the bending, torsion and tension behaviour is indiscernible from the bending, torsion and tension behaviour of the saw cord outside the splice.

According a first aspect of the invention, a method for producing a saw cord loop as defined by the features of claim 1 is provided.

A steel cord that will become the carrier wire of the saw cord is selected. The steel cord has a core strand around which a number of outer strands are twisted in a certain lay direction (for example left (S) or right (Z)) and with a certain lay length. The steel cord has an outer diameter 'OD'. The core and outer strands are assembled out of steel filaments. Although the invention is not limited to any particular kind of steel cord, for saw cords the number of filaments in the outer strands is preferably seven: one core filament that is surrounded by six outer filaments. The core filament may be chosen slightly larger than the outer filaments to accommodate for the twisting of the outer filaments. One denotes this as a (1+6) strand.

Preferably six outer strands are present. This has been found to offer a good balance between the work involved in the splicing and the quality of the splice. Five or four outer strands lead to a local loss of strength at a disconnection of an outer strand of respectively more than 1/6th or more than 1/5^{th} of the original strength. When six outer strands are present this results in a local 1/7^{th} loss of strength. When using seven or more outer strands, the local loss in strength at a disconnection of an outer strand is less, but the work involved to make the splice increases. Also - as the core strand is larger when the number of outer strands increases - more strength is lost when the core strand is disconnected.

The core strand is also made of steel filaments twisted together. It can be of the (1+6) type. Or the core can consist of one core filament with six filaments in a first layer covered by twelve filaments twisted around the core in a further layer (1+6+12 type). Alternative constructions like a d1+N×d2/N×d3/N×d2 (N=5,6,7,8, or 9) Warrington type of strand is also possible. In a Warrington type a core wire of a first diameter 'd1' is surrounded by a first layer of filaments of a second diameter 'd2' that is on its turn surrounded by a second layer of filaments with alternating wires of second 'd2' and third 'd3' diameter. The strand is formed in a single step with a single laylength.

All filaments are steel filaments and are made of high carbon steel (more than 0.50%C). The filaments are usually galvanised and sometimes brass plated. For example: for more demanding applications other types of steel cords are used such as 7x(1+6+12) types wherein the filaments are brass plated. The brass plating enables a very good bond with rubber that is injected in between the saw beads for this kind of saw cord.

A work length of steel cord is cut from a longer length. The work length has a first and second end. The work length is larger than the desired loop length. The loop length is determined by the design of the saw machine. In general it is between 15 and 30 meter. Loop lengths seem to standardise around 16, 18, 20, or 24.5 meter.

Saw beads are provided. Saw beads can be made by a number of techniques:
- By means of powder metallurgical sintering. Metal powders are mixed with abrasive particles, pressed together in an annular mould, and sintered to form an annular compact. The annular compact is brazed to a metal sleeve. The bead is then threaded on the steel cord work length;
- Alternatively the metal sleeve can be eliminated and the annular compact can be threaded directly on the steel cord;
- Recently, beads obtained by laser cladding have been developed (WO 2012/119946 A1, WO 2012/119947 A1). In that technique abrasive layers are deposited directly on the metal sleeve. The beads are then threaded on the steel cord.

In any case the beads produced have a through hole with an inner diameter 'ID'. The steel cord has an outer diameter 'OD'. The difference between the inner diameter of the through hole of the bead and the outer diameter of the steel cord (ID-OD) is smaller than 1.0 mm. A bead with a too large through hole compared to the diameter of the cord cannot be sufficiently held by the polymer jacket. Possibly the difference between ID and OD is less than 0.70 mm or even less than or equal to 0.50 mm. Of course some play between the steel cord and the saw bead must be present to glide the beads over the cord, so a play ID-OD of at least 0.10 mm is a minimum.

The working length is subsequently formed into a loop by overlapping the first and second end over an overlap length. In this overlap length the splice will be formed. The overlap length will form an integral part of the loop so only one overlap length of steel cord is lost in the making of the splice. The working length is thus the loop length plus one overlap length. As there are between 35 and 40 beads per meter - depending on the material to be cut by the saw cord loop - this means that between 525 and 1200 beads - in proportion to the length of the loop - must threaded on the steel cord prior to making the splice.

In what follow the case of a steel cord with six outer strands is used to illustrate the procedure. The procedure can extended to any number of strands by the guidance of this disclosure. The outer strands of the first and second end are unwound from the core strand at least over the overlap length. Corresponding strands of both ends are cut at the same place preferable by cutting the strands provisionally together with a wire cutter. With 'corresponding strands' is meant strands that have the same angular position around the core strand. If at the first cord end the position of the strands are numbered 1, 2, 3, 4, 5 and 6 in the counter clockwise direction, the corresponding strands are numbered 1', 2', 3', 4', 5' and 6' in the clockwise direction. 1 and 1' are then cut at position P1, 2 and 2' at position P2 and so on till 6 and 6' that are cut at position P6. Also the core strand of both ends 0 and 0' is cut at a position P0. The end of a cut strand will be called 'tip' hereinafter.

When finally cutting the strands care is taken that the strand is flattened at the end. With this is meant that the end wires are squeezed together and have a substantial V-shaped or U-shaped tip when viewed for example under a microscope. As the strand is squeezed during cutting it can somewhat extend and broaden slightly at the tip compared to the overall diameter of the strand but this is not a considered a problem by the inventors.

Alternatively the end wires can be held together by welding or soldering, possibly after shortening the lay length of the strand during welding or soldering. Thereafter the end is cut into a substantial V-shaped or U-shaped tip at the weld or solder. Care must be taken that the diameter of the welded or soldered end prior to cutting does not increase compared to the outer strand diameter.

Then the core strand tip of first and second end are abutted to one another. Subsequently the outer strands are wound back into position. Characteristic about the method is now that after rewinding of said outer strands in position the flattening of the tips are oriented circumferentially. With 'oriented circumferentially' is meant that the flattening is along a circle centred in the middle of the steel cord. In order to achieve this orientation cutting must be performed while keeping the plane of cutting in a circumferential orientation relative to the helix of the unwound outer strand.

When turned back into position the tips of the corresponding ends should not overlap but should also not be separated more than 5 mm from one another.

After the outer strands are arranged back into position, the beads are evenly distributed over the loop. They are separated by a bead separation distance. This bead separation distance is dictated by the mould shape as the beads on the steel cord must be carefully inserted into the correct positions of the mould. After closure of the mould a polymer is injected in between the beads resulting in a polymer jacket in between the beads. Reference is made to WO 2013/102542 wherein a mould particularly suited for the injection moulding of saw cord is described.

The advantage of having a flattened and squeezed tip is that no wires will come lose and hamper the shifting of the beads during the positioning in the injection mould. Further, the circumferential orientation of the flattened outer strand tips prevents that the strand will protrude out of the mantel of the steel cord. Again any protrusion of the wire end will result in an obstruction of the sliding beads.

In a further preferred refinement of the method during the cutting of the outer strands the tip of the outer strand is given a plastic bend. The bend is oriented radially inward after rewinding of the outer strands in position. During cutting the bending is performed towards the center of the helix formed by the outer strands. The plastic bend should not extend over more than five times the diameter of the strand and is preferably within three times the diameter of the strand. The radius of curvature of the bend is between 0.5 and 5 times the diameter of the outer strand. Even more preferred is if the bend has a radius of curvature of about 1 to 4 times the diameter of the strand.

The advantage of having a radially inward bent tip is that the outer strand tip will not protrude from the splice even not when the splice is subjected to a load of about 200 kN. As during injection moulding the loop has to be held taut, the outer strand tips will tend to open and could protrude from the surface of the splice. This is prevented by the inward bend at the outer strand tip.

The fact that the beads can slide easily over the bare splice even when the steel cord is held under tension enables to automatically position the beads in the mould prior to the closure of the mould. The beads are currently manually positioned into the mould which is labour intensive.

A further preferred embodiment of the inventive method can be implemented on its own or in conjunction with the above described tip shape and orientation. The positions P1 to P6 are preferably evenly spread in axial length over the splice length. The 'splice length' is the axial distance between the two outer strand abutments that are farthest away from one another. The splice length is shorter or equal to the overlap length, the difference depending on the position of the core strand abutment. An 'abutment' is the position where the tip of a strand of the first end meets the tip of the corresponding strand of the second end. A particularly preferred arrangement of the outer splices is that when abutments are arranged at axial positions that are multiples of a step length 'Δ' that is equal to one fifth of the splice length when six outer strands are present.

When Δ is chosen to be a multiple of the bead separation distance the number of beads between the abutments will be equal. The abutments can be made to fall under the beads or just between the beads. The latter is more preferred. Alternatively Δ can be set to a number 'Q' of lay lengths 'LL' of the steel cord. Preferable Δ is then equal or larger than a cord lay length (Q≥1), but more preferred is if Q is from 2 to 40, or even 10 to 30 for example 20. In any case it is best that it is not more than 50 wavelengths as then the splice becomes too long (6×50×LL). Note that Q must not be an integer value: a fractional value e.g. Q=20.5 will put the abutments in angular positions that are not all multiple of 60°.

An arrangement of abutments can be conveniently noted as a sextuplet of positions when a steel cord with six outer strands is used. For example (2,1,4,3,5,6) is the arrangement wherein the first strand (1,1') abutment is at position '2×Δ', the second strand abutment (2,2') at position '1×Δ', the third strand abutment (3,3') at position '4×Δ', and so on while the sixth strand abutment (6,6') is on position '6×Δ'. The total distance between the outer abutment positions is 5×Δ i.e. the splice length. From the arrangement the positions can be derived by multiplication with Δ: Δ×(2,1,4,3,5,6). By convention the first position is always chosen at the strand abutment of the first end that is farthest away from the splice and that outer strand is always named as the first strand. Conventional arrangements therefore start with '1' in the first position. All possible arrangements are then all permutations of the remaining strands 2 to 6.

There are 5! or 120 such conventional arrangements. Each of these arrangements has just one abutment at each one axial position. Or equivalently: none of these arrangements has two or more abutments at one single axial position. Hence the bending, torsional or tensional stiffness is only marginally influenced at that position. This is an advantage.

Equivalent arrangements can be obtained by rotating the arrangement. In the example of (2,1,4,3,5,6) clockwise shifts will result in (1,4,3,5,6,2) - the conventional arrangement -, (4,3,5,6,2,1), (3,5,6,2,1,4) and so on. The opposite end of the splice will have a complementary pattern: (5,6,3,4,2,1) or in conventional arrangement (1,5,6,3,4,2). Further, one can also generate the mirror image of the arrangement by reversing the order (6,5,3,4,1,2) or in conventional arrangement (1,2,6,5,3,4).

For each arrangement a 'common length' can be defined. This is the total length where adjacent strands of first and second end share a common side. So the common length is always counted between strands of different ends. In the example (2,1,4,3,5,6) the common length is 1+3+1+2+1+4 or 12×Δ or the sum of the absolute distances between subsequent positions. This 'common length' is not affected by rotation, complement or order reversal as such operations do not affect the distance between adjacent abutments. The common length is always an even multiple of Δ as moving an abutment one step results in an increase or decrease of 2×Δ or 0.

From those 120 arrangements there are twelve conventional arrangements that have a common length 18×Δ. This is the highest possible length of all permutations. The larger the common length is the better the transfer of forces from first end to second end will be as a longer length is shared between strands of the two opposite ends of the splice. Arrangements with a common length that is larger than 17×Δ or even better equal to 18×Δ are therefore highly preferred.

Of those twelve arrangements of maximum common length two are even more advantageous: (1,4,2,5,3,6) and (1,4,2,6,3,5). These arrangements have the additional benefit that abutments on neighbouring outer strands are separated by a distance of 2×Δ or more. An example a contrario: the arrangement (1,5,2,6,3,4) also has a common length of 18×Δ, but there the abutment of fifth and sixth strands is separated by only 1×Δ which is considered close. At the other end of the spectrum the simple (1,2,3,4,5,6) arrangement has the lowest possible common length of 10×Δ of all permutation abutments. Also abutments on neighbouring strands are only one Δ apart (except the first and sixth strand) which is not recommended.

Any rotation over 60° of (1,4,2,6,3,5) (or (1,4,2,5,3,6) mutatis mutandis) will also show this high common length property. Likewise the complement (6,3,5,1,4,2) i.e. the lengths as seen from the second end also has this highest common length as well as the reversed order (5,3,6,2,4,1) and the complement thereof (3,5,1,4,2,6). And of course any rotation of the reversed order and the complement. There are 12 arrangements that can be derived from (1,4,2,6,3,5) and 12 arrangements that can be derived from (1,4,2,5,3,6).

Larger common lengths are possible but these have at least two abutments on the same position resulting in a locally lower stiffness. For example the arrangement (1,6,1,6,1,6) has the highest common length of 30×Δ but has at either end of the splice 3 abutments present which results in a locally very low stiffness.

There remains the position of the abutment (0,0') of the core strand. The core strand occupies a unique position in that it shares a common length with up to all six outer strands of the opposing end. However, as the core strand is not helically deformed the anchorage between core and outer strands is less than between neighbouring outer strands. By preference this common length is also maximal i.e. the abutment of the core strand is outside of the span of the abutments of the outer strands for example at position 7×Δ or further away from the span or at position 0×Δ or further away from the span. With the 'span' is meant the range between the abutments of outer strands that are farthest away. In this case the overlap length is larger than the splice length.

Alternatively, the core strand can abut inside the span. For example in the middle of the span. In order to avoid having two abutments at the same position or nearby positions, the positions above or equal to 4×Δ can be shifted one step upward. For example the preferred arrangement of outer strands (1,4,2,5,3,6) must then be cut in positions (1,5,2,6,3,7) leaving the position 4×Δ as the splice position of the core strand. In this case the overlap length is equal to the splice length. The step Δ then of course has to be adapted concomitantly in that it is one sixth of the splice length.

The inventors remark that like considerations can be applied to a cord having one core strand and seven outer strands. In that case there are 16 generating arrangements that have a maximum common length of 24×Δ - i.e. the common length is larger than 23×Δ - and abutments in neighbouring strands are 2×Δ or more separated in axial length. The arrangements are listed in Table 1.

**Table 1**

| | Arrangement | | Arrangement |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |

The arrangement 'H' is particularly preferred as the axial distance between neighbouring abutments is 3×Δ or more. The same reasoning for the position of the core strand abutment applies as for the case of six outer strands. Hence, the inversed, the complement and the rotations of the arrangements will also show the same common length and interdistances as the listed arrangements. Like considerations can be made for eight, nine or more outer strands.

By this procedure it turns out that it is possible to limit the length of the splice to within 2 meters and even below 1.20 meter, the best result so far being within 80 cm. Advantageously all abutments can be covered within one single injection mould length. By reducing the length of the splice, the amount of time associated with unwinding and winding in of the outer strands is proportionally reduced. Furthermore, as this is an external splice, the splice can be made in less time compared to an internal splice. The inventors have made a full splice in less than thirty minutes. Hence the splice can be made very efficiently.

When the splice is made according to the above method, there is very little distortion of the saw cord properties in the splice area. The saw cord keeps its bending, torsional and axial stiffness. The adequate distribution of the abutments in combination with the orientation of the strand tips results in a behaviour of the saw cord in the splice area that does not noticeably differ from that outside of the splice area. As the overlap length is short the length over which the tensioning, bending or twisting properties of the cord are affected - if affected at all - is seriously restricted. This greatly reduces the risk of 'bead ovalisation'.

In order to be able to easily reposition the outer strands after unwinding, the strands must have received a proper preforming during manufacturing. When the outer strand is unwound and free of tension, it will assume a helix shape. The helix shape has a circumscribed diameter 'CD'. The range of this circumscribed diameter must be between 0.95 to 1.00 times the outer diameter of the steel cord 'OD'. More preferably it is between 0.95 to 0.99 times the outer diameter of the steel cord 'OD'. It the CD of a strand is less than 0.95×OD when the strand is wound back in position it will be too tight and the tip will overlap with the tip of the corresponding strand. When the CD is higher than 1.00×OD the tips will fall short from the corresponding strand tip and there will remain too much distance between the tips of corresponding outer strands.

The inventors use an easy method to introduce torsions in the loop prior to closing. Prior to forming the loop the work length of the steel cord is laid in two or more turns without adding any torsion. For example the turns can be laid around a pole. One torsion per length of a turn will be finally induced in the steel cord after closure. Typically 1 to 2 turns per meter are needed. The turns should be in the same direction of the lay direction of the steel cord. For example when the cord is a 'Z' oriented cord, the turns should have 'Z' orientation when viewed from the side.

According a second aspect of the invention, a saw cord loop as defined by the features of claim 12 is provided. The saw cord loop comprises a steel cord having a core strand and outer strands whereon saw beads are threaded. The steel cord shows a splice that has two sides corresponding to the ends of the steel cord prior to forming the splice. The tips of the outer strands of the first side of the splice abut to corresponding tips of the outer strands of the second side of the splice at the abutments. Characteristic of the splice is that the tips of said outer strands are flattened. The flattening of the tips is oriented circumferentially when viewed in a cross section of the saw cord loop at said abutments.

In a further preferred embodiment of the saw cord loop, the tips of the outer strands are provided with a plastic bend, the bend being oriented radially inward in a section of the outer strands at the abutment. The bend does not extend over more than five times preferably extends over less than two times the diameter of the outer strand and has a radius of curvature of between half and five times the diameter of the outer strand. The section is made in a plane oblique to the axis of the steel cord. The section plane is inclined to the axis of the steel cord according the helix angle of the outer strands and includes the center filament of the outer strand at the tip. Possible ways to make the section are by means of embedding the cord splice in an epoxy resin and having it cut through or by means of micro X-ray computer tomography.

In a further preferred embodiment of the saw cord loop, the saw cord loop comprises a steel cord with saw beads threaded thereon. The steel cord comprises a core strand and six outer strands. The steel cord comprises a splice with a splice length. In the splice the tips of corresponding outer strands abut to one another at abutments. The splice length is the axial distance along the loop between the two abutments of the outer strands that are farthest away from one another. The abutments are axially evenly distributed over the splice length at axial positions separated by a step length 'Δ' that is equal to one fifth of the splice length. At each axial position there is only one abutment present. The adjacent outer strands of the first and second side share a common length that is larger than 17×Δ or, even better, equal to 18×Δ.

This embodiment has the advantage that the there is a maximal transfer of forces in combination with the fact that only one abutment is present at each axial position. This makes the splice area indiscernible from the remainder of the saw cord loop in terms of bending, tension or torsion behaviour.

In a further preferred embodiment the axial positions of the abutments is according an arrangement Δ×(1,4,2,5,3,6) or Δ×(1,4,2,6,3,5) or any arrangements derived therefrom by order reversal, rotation or complement. This particular arrangement has the further advantage that neighbouring abutments are separated as much as possible form one another namely 2×Δ.

In an alternative embodiment the saw cord loop comprises a steel cord with a core strand and seven outer strands is presented. As before the splice length is equal to the axial distance between the two abutments of the outer strands that are farthest away from one another. Again the abutments are evenly distributed from one another with a step length Δ that is in this case equal to one sixth of the splice length. By such arrangement a common length larger than 23×Δ or even better equal to 24×Δ can be achieved.

The axial position of the abutment of the core strand is non-limiting to the inventive saw cord loop as long as it does not coincide with any of the outer strand abutments. By preference it is outside the span of the outer strand abutments with a separating distance equal to Δ or more. Alternatively, the core strand abutment can be situated within the span, but then the outer strands have to be shifted a distance Δ from the core strand abutment. If the core strand abutment is situated within the span of the outer strand abutments, the step Δ is preferably taken to be one sixth of the splice length for a steel cord with one core strand plus six outer strands or one seventh of the splice length for a steel cord with one core strand plus seven outer strands.

Alternatively the axial positions of the abutments can be according any arrangement of according to Table 1 or any other arrangement derived therefrom by means of order reversal, rotation or complement. These arrangements have the advantage that the distance between abutments is 2×Δ or more.

The place of the abutments is subject to variation due to inevitable uncertainties in the procedure. The actual placement of the abutments can vary within +/- 0.5×Δ (limits not included) of the axial position as prescribed by the arrangement. More preferred the abutments remain within +/- 0.10×Δ of the arrangement positions. A skilled person can position abutments within +/- 5 mm of the desired position

### Brief Description of Figures in the Drawings

Figure 1 shows a prior art splice;
Figure 2 shows the increased deterioration of the saw beads in the vicinity of the splice;
Figure 3a shows the orientation of the flattened tip of the outer strand at the abutment of a splice;
Figure 3b shows a strand with and without the bending of the strand according the invention.
Figure 4 shows an arrangement according the invention in schematic form;
Figure 5 shows the position of the abutments in the 'rolled' out mantle of the saw cord.

### Mode(s) for Carrying Out the Invention

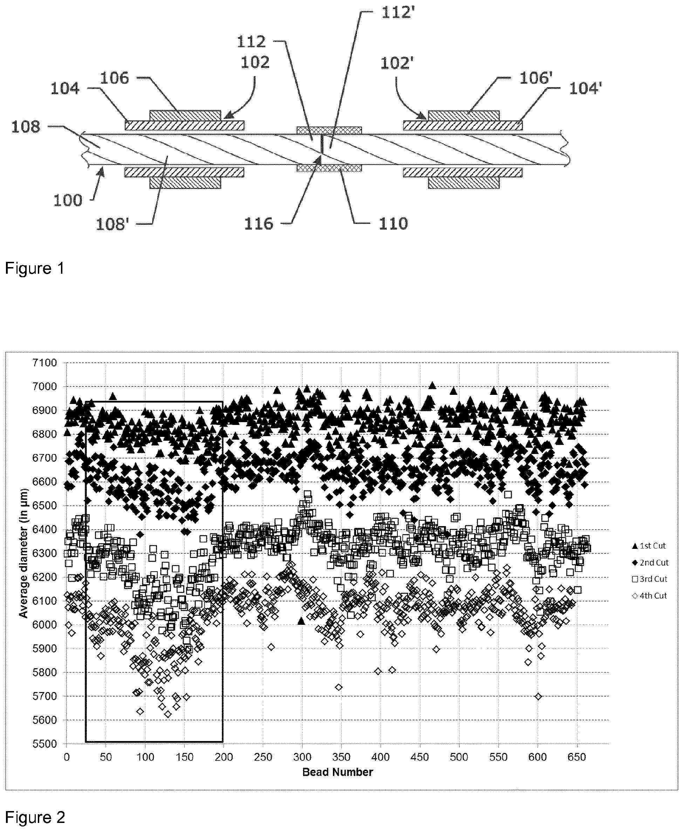

Figure 1 shows a splice for a saw cord loop as currently suggested in WO 2015/028950 A1. A steel cord 100 consists of several outer strands 108, 108' that surround a core strand (not shown). Beads 102, 102' comprising a sleeve 104, 104' on which an abrasive layer 106, 106' is fixed are slid over the steel cord 100. At the abutment 116 the two tips 112, 112' of the corresponding strands meet. At the abutment 116 all outer strands are fixed together by means of crimp sleeve 110. The crimp sleeve introduces an additional bending stiffness into the saw cord which give an unevenness to the cord. Furthermore the presence of the crimp sleeve 110 does not allow the free movement of the sawing beads once the splice is made. This inhibits the automatic postioning of the beads prior to injection moulding of the polymer.

When observing the working of a saw cord on a single loop slabbing machine, the inventors heard a regular 'swoosh' sound in pace with the loop period. When measuring the average diameter of individual beads after each cut, they found that the diameter in the splice area decreased faster than that of the beads outside the splice area. See Figure 2. In the abscissa the bead number along the loop is mentioned starting from a fixed reference. In ordinate the average diameter of each bead is indicated. Each symbol represents one bead. At the first cut (▲) no appreciable difference in diameter along the length of the loop exists. At the second cut (◆) the beads between number 25 to 200 show an increased wear that only progresses in the third (◊) and fourth cut (□). The beads in the rectangle were situated in and near the splice zone. The splice was a regular step external splice of type (1,2,3,4,5,6) . Without being bound by this hypothesis, the inventors attribute this to a changing steel cord behaviour in the vicinity of the splice (vibration or rotation of the cord) resulting in the increased wear at the splice.

In an attempt to make a splice that allows for the gliding of the saw beads over the splice prior to injection moulding the inventors tried several methods. The best practice turned out to be wherein the tip of the outer strands is carefully cut. The cut is characterised in that:
- The tip must be flattened during cutting and the flattening must be oriented circumferentially after the outer strand has been repositioned in the splice;
- The tip must be bent radially inward to the steel cord core after the outer strand has been repositioned in the splice.

The cutting jaws have preferably a beak shape such that, on closing of the cutters, the strand is drawn toward the pivot point of the cutter (not pulled away from the pivot point as in for example diagonal pliers). A particularly preferred tool is a Felco™ C3 type of cutter. The cutter holding the outer strand to be cut is positioned circumferentially to the axis of the steel cord. Prior to cutting, while holding the strand in the beaks, the outer strand is plastically bent, followed by cutting.

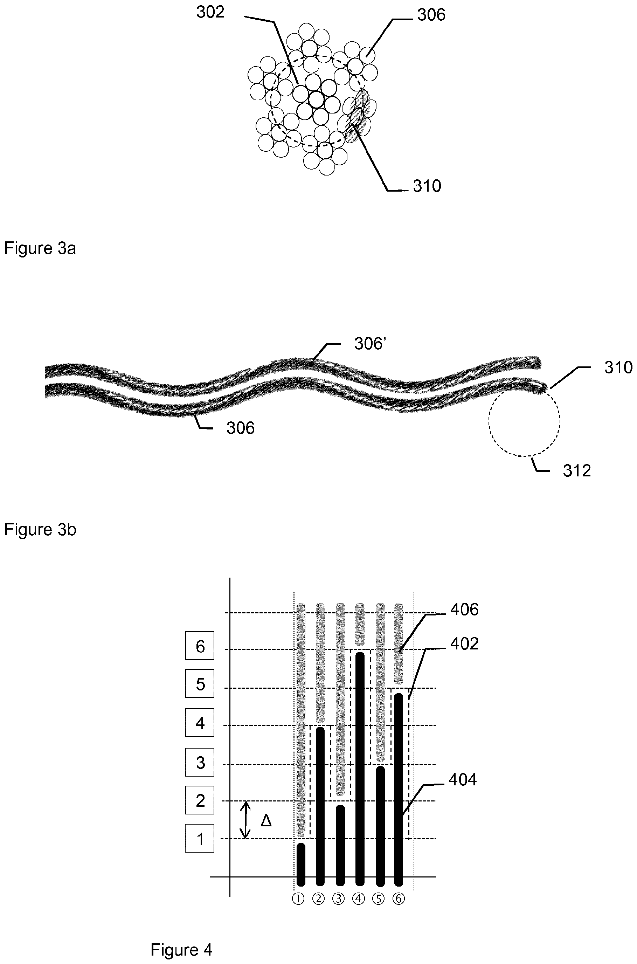

Figure 3a depicts the orientation of the flattening at the abutment. Figure 3a shows a cross section perpendicular to the axis of the steel cord at the position of the abutment. The core strand 302 is surrounded by six outer strands 306. Each strand is composed of a core wire surrounded by six outer wires. The cut strand is indicated with 310. The tip, indicated with the hatched area, is flattened and circumferentially oriented i.e. along the direction of the dashed circle concentric with the centre of the steel cord.

Figure 3b shows two outer strands 306, 306' unravelled from a cord. The outer strand 306 has been cut according the invention, while the outer strand 306' has not been cut according the invention. In order to observe the bending of the tip 310, both strands have been put side by side. While the outer strand 306' follows the sinusoidal projection of the helix shape also at the end, the tip 310 clearly shows an inward bending on the outer strand 306. The curvature is indicated by the circle osculating 312 to the center of the outer strand. The circle 312 has a diameter of 5 times the diameter of the strand 306 hence the radius of curvature at the tip 310 is about 2.5 times the diameter of the strand. An alternative way of verifying the presence of the bend is to remove the outer filaments and to oberve the shape of the core filament end of the outer strand.

Figure 4 illustrates the concept of a splice having a large common length without abutments at the same axial position i.e. each abutment has a different axial position. The case (1,4,2,6,3,5) is represented. The strands of the first side are numbered (① to ⑥) while the position of the abutments is noted in the squares □. The distance between the abutments is Δ. The strands of the first end are in black (e.g. 404), while the strands of the second end are in grey (e.g. 406). The 'common length' is indicated with the dashed line. Note that, as the strands are arranged around the core, the strand ⑥ is a neighbour of the strand ① and also there a common length 402 is present. One can easily verify that the common length is 18×Δ.

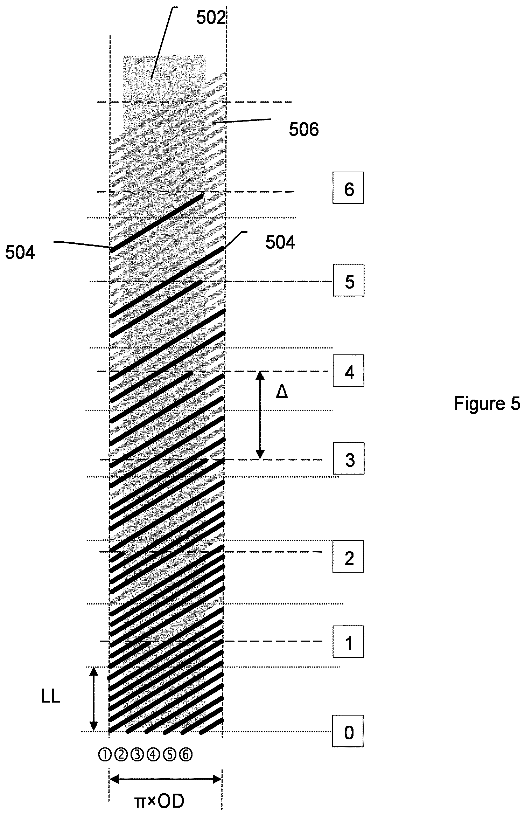

Figure 5 illustrates the concept of an arrangement when account is taken of the helix shape of the strands. The figure represents the six outer strands of a steel cord that have been rolled open over the circumference 'π×OD'. Again the strands are numbered (① to ⑥). Along the axis of the steel cord, the lay length 'LL' repeats as indicated by the dotted lines, and the strand disappearing at the right side re-enter at the left side: see for example 504, the fourth outer strand of the first steel cord end. The outer strands of the second strand 506 are represented in grey. The core strand of the second steel cord end 502 is schematically represented below the outer strands. The core strand is in contact with all strands.

Next to that there is the step length Δ along the axial length that in this case is set equal to 1.4 times the laylength LL i.e. Q=1.4. At each multiple of Δ an abutment is positioned. Again the multiples are indicated by the numbers in the squares □. The abutments are position according the arrangement (1,4,2,6,3,5). The core strands abut at position '0'. Note that no two abutments are present at the same place. Note that the scale ratios in axial and circumferential direction are not realistic. The figure is only to illustrate the basic idea. Finally as the strands are wound around the core according a helix curve, the true length along the strands is larger than the length measured along the axis. Hence the length shared between adjacent outer strands of opposite sides is larger by the ratio of one helix length revolution to one lay length compared to the common length as defined above.

Before making the splice the working length is coiled around a pole in the same lay direction of the cord. Every turn will later induce one torsion over the length of the turn. In this way the two ends can be easily manipulated without having to clamp the ends after having induced torsions into the steel cord.

With this arrangement it turns out to be possible to make a splice in a short time and over a limited length. Furthermore the arrangement of the strands results in a high common length that provides a better anchorage between the two ends of the steel cord. After injection moulding the injected polymer acts as an additional fixture that further improves the connection between adjacent strands of the different ends.

## Claims

1. Method for producing a saw cord loop comprising the steps of:
- Providing a steel cord having a core strand and outer strands, said outer strands being twisted around said core strand, said steel cord having an outer diameter 'OD';
- Cutting said steel cord to a work length, said work length having a first end and a second end;
- Providing saw beads having a through hole with an inner diameter 'ID', the difference between said outer diameter 'OD' and said inner diameter 'ID' being smaller than 1 mm ;
- Threading said saw beads over said steel cord;
- Forming a loop having a loop length, said loop length being shorter than said work length, the overlap having an overlap length;
- Unwinding said outer strands from said first and said second end over said overlap length;
- Cutting corresponding outer strands and the core strand of the first and second end in spread places over the overlap length, said strands ending in a tip;
- Abutting the core strand tip of first and second end at the core strand abutment;
- Rewinding the outer strands in position thereby forming a closed loop whereby tips of the outer strands of first and second end abut to one another at the outer strand abutments;
- Distributing said beads over the loop with a bead separation distance apart;
- Injection moulding a polymer jacket in between said beads; **characterised in that**
during cutting of said outer strands the tip of said outer strands is flattened, the flattening of said tips being oriented circumferentially after rewinding of said outer strands in position.

2. The method according to claim 1 wherein during cutting of the outer strands the tip of said outer strands is given a plastic bend said bend being oriented radially inward after rewinding of said outer strands in position .

3. The method according to claim 2 wherein said bend does not extend over more than five times the diameter of said outer strand and wherein the radius of curvature of said bend is between half and five times the diameter of said outer strand.

4. The method according to any one of claims 1 to 3 wherein said steel cord has six outer strands, wherein a splice length is the axial distance between the two outer strand abutments that are farthest away from one another, said splice length being smaller than or equal to said overlap length, said, said outer strand abutments being axially evenly distributed over said splice length at axial positions with a step length 'Δ' equal to one fifth of said splice length, wherein one abutment occurs at one axial position and wherein adjacent outer strands of first and second end share a common length that is larger than 17×Δ.

5. The method according to claim 4 wherein the position of the outer strand abutments is according an arrangement Δ×(1,4,2,5,3,6) or Δ×(1,4,2,6,3,5) or any arrangements derived therefrom by order reversal, rotation or complement.

6. The method according to any one of claims 1 to 3 wherein said steel cord has seven outer strands, wherein a splice length is the axial distance between the two outer strand abutments that are axially farthest away from one another, said splice length being smaller than or equal to said overlap length, , said outer strand abutments are axially evenly distributed over said splice length at axial positions with a step length 'Δ' equal to one sixth of said splice length, wherein no two abutments occur at the same axial position and wherein adjacent outer strands of first and second end share a common length that is larger than 23×Δ.

7. The method according to claim 6 wherein the position of the outer strand abutments is according any arrangement according following table
| | | | |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |
or any arrangements derived therefrom by order reversal, rotation or complement.

8. The method according to any one of claims 4 to 7 wherein said step length is an integer multiple of said bead separation distance.

9. The method according to any one of claims 1 to 8 wherein the position of said core strand abutment is outside of the span of said outer strands abutments.

10. The method according to any one of claims 1 to 8 wherein the position of said core strand abutment is inside of the span of said outer strand abutments.

11. The method according to any one of claims 1 to 10 wherein said unwound outer strands have a circumscribed diameter 'CD', said CD being between 0.95 and 1.005 times said OD.

12. A saw cord loop comprising a steel cord with saw beads threaded thereon
wherein said steel cord comprises a core strand and outer strands, said steel cord having a splice wherein the tips of the outer strands of the first side of said splice abut to corresponding tips of the outer strands of the second side of said splice at outer strand abutments, **characterised in that**
said tips of said outer strands are flattened, the flattening of said tips being oriented circumferentially in a cross section of said saw cord loop at said abutments.

13. The saw cord loop according to claim 12 wherein said tips of said outer strands are provided with a plastic bend, said bend being oriented radially inward in a section of said outer strands at said abutments.

14. The saw cord loop according to any one of claims 12 to 13 wherein said steel cord comprises a core strand and six outer strands, said steel cord having a splice with a splice length equal to the axial distance between the two outer strand abutments that are farthest away from one another, said outer strand abutments being axially evenly distributed at axial positions over said splice length with a step length 'Δ' equal to one fifth of the splice length, wherein one abutment is present at one axial position and wherein adjacent outer strands of the first and second side share a common length that is larger than 17×Δ.

15. The saw cord loop according claim 14 wherein the axial positions of the abutments is according an arrangement Δ×(1,4,2,5,3,6) or Δ×(1,4,2,6,3,5) or any arrangements derived therefrom by order reversal, rotation or complement.

16. The saw cord loop according to any one of claims 12 to 13 wherein said steel cord comprises a core strand and seven outer strands, said steel cord having a splice with a splice length equal to the axial distance between the two outer strand abutments that are farthest away from one another, said outer strand abutments being axially evenly distributed at axial positions over said splice length with a step length 'Δ' equal to one sixth of the splice length, wherein one abutment is present at one axial position and adjacent outer strands of the first and second side share a common length that is larger than 23×Δ.

17. The saw cord loop according claim 16 wherein the axial position of the outer strand abutments is according any arrangement according following table
| | | | |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |
or any arrangements derived therefrom by order reversal, rotation or complement.

## Patentansprüche

1. Verfahren zur Herstellung einer Seilsägeschlaufe, die folgenden Schritte umfassend:
- Vorsehen eines Stahlseils, das einen Kernstrang und Außenstränge aufweist, wobei die Außenstränge um den Kernstrang verdrillt sind, wobei das Stahlseil einen Außendurchmesser OD aufweist;
- Schneiden eines Stahlseils auf eine Arbeitslänge, wobei die Arbeitslänge ein erstes Ende und ein zweites Ende aufweist;
- Vorsehen von Sägeperlen, die eine Durchgangsbohrung mit einem Innendurchmesser ID aufweisen, wobei die Differenz zwischen dem Außendurchmesser OD und dem Innendurchmesser ID kleiner als 1 mm ist;
- Fädeln der Sägeperlen über das Stahlseil;
- Ausbilden einer Schlaufe, die eine Schlaufenlänge aufweist, wobei die Schlaufenlänge kürzer als die Arbeitslänge ist, wobei die Überlagerung eine Überlagerungslänge aufweist;
- Abwickeln der Außenstränge vom ersten und zweiten Ende über die Überlagerungslänge;
- Schneiden zugehöriger Außenstränge und des Kernstrangs des ersten und zweiten Endes an beabstandeten Stellen über die Überlagerungslänge, wobei die Stränge in einer Spitze enden;
- Anschlagen der Kernstrangspitze des ersten und zweiten Endes am Kernstranganschlag;
- Wiederaufwickeln der Außenstränge in ihre ursprüngliche Position und dadurch Ausbilden einer geschlossenen Schlaufe, wobei Spitzen der Außenstränge des ersten und zweiten Endes an den Außenstranganschlägen aneinander anschlagen;
- Verteilen der Perlen über die Schlaufe mit einem Perlentrennungsabstand;
- Spritzgießen einer Polymer-Ummantelung zwischen die Perlen;
**dadurch gekennzeichnet, dass**
beim Schneiden der Außenstränge die Spitze der Außenstränge abgeflacht wird, wobei das Abflachen der Spitzen in Umfangsrichtung ausgerichtet ist, nachdem die Außenstränge in ihre ursprüngliche Position wiederaufgewickelt wurden.

2. Verfahren nach Anspruch 1, wobei beim Schneiden der Außenstränge die Spitze der Außenstränge mit einem Kunststoffbogen versehen wird, wobei der Bogen nach dem Wiederaufwickeln der Außenstränge in ihre ursprüngliche Position radial nach innen ausgerichtet ist.

3. Verfahren nach Anspruch 2, wobei sich der Bogen nicht über mehr als das Fünffache des Durchmessers des Außenstrangs erstreckt und wobei der Krümmungsradius des Bogens die Hälfte bis das Fünffache des Durchmessers des Außenstrangs beträgt.

4. Verfahren nach einem der Ansprüche 1 bis 3, wobei das Stahlseil sechs Außenstränge aufweist, wobei eine Spleißlänge der axiale Abstand zwischen den zwei Außenstranganschlägen, die am weitesten voneinander entfernt sind, ist, wobei die Spleißlänge kleiner als die oder gleich der Überlagerungslänge ist, wobei die Außenstranganschläge über die Spleißlänge an Axialpositionen mit einer Schrittlänge Δ, die einem Fünftel der Spleißlänge entspricht, axial gleichmäßig verteilt sind, wobei ein Anschlag an einer axialen Position auftritt und wobei angrenzende Außenstränge des ersten und zweiten Endes eine gemeinsame Länge aufweisen, die größer als 17×Δ ist.

5. Verfahren nach Anspruch 4, wobei die Position der Außenstranganschläge einer Anordnung Δ× (1, 4, 2, 5, 3, 6) oder Δ× (1, 4, 2, 6, 3, 5) oder einer beliebigen Anordnung, die daraus durch Umkehrung, Drehung oder Ergänzung der Reihenfolge abgeleitet ist, entspricht.

6. Verfahren nach einem der Ansprüche 1 bis 3, wobei das Stahlseil sieben Außenstränge aufweist, wobei eine Spleißlänge der axiale Abstand zwischen den zwei Außenstranganschlägen, die axial am weitesten voneinander entfernt sind, ist, wobei die Spleißlänge kleiner als die oder gleich der Überlagerungslänge ist, wobei die Außenstranganschläge an axialen Positionen mit einer Schrittlänge Δ, die einem Sechstel der Spleißlänge entspricht, über die Spleißlänge axial gleichmäßig verteilt sind, wobei keine zwei Anschläge an derselben axialen Position auftreten und wobei angrenzende Außenstränge des ersten und zweiten Endes eine gemeinsame Länge aufweisen, die größer als 23×Δ ist.

7. Verfahren nach Anspruch 6, wobei die Position der Außenstranganschläge einer beliebigen Anordnung gemäß der folgenden Tabelle
| | | | |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |
oder einer beliebigen Anordnung, die daraus durch Umkehrung, Drehung oder Ergänzung der Reihenfolge abgeleitet ist, entspricht.

8. Verfahren nach einem der Ansprüche 4 bis 7, wobei die Schrittlänge ein ganzzahliges Vielfaches des Perlentrennungsabstands ist.

9. Verfahren nach einem der Ansprüche 1 bis 8, wobei die Position des Kernstranganschlags außerhalb der Spanne der Außenstranganschläge liegt.

10. Verfahren nach einem der Ansprüche 1 bis 8, wobei die Position des Kernstranganschlags innerhalb der Spanne der Außenstranganschläge liegt.

11. Verfahren nach einem der Ansprüche 1 bis 10, wobei die abgewickelten Außenstränge einen umschriebenen Durchmesser CD aufweisen, wobei der CD das 0,95- bis 1,005-Fache des OD beträgt.

12. Seilsägeschlaufe, ein Stahlseil mit darauf aufgefädelten Sägeperlen umfassend, wobei das Stahlseil einen Kernstrang und Außenstränge umfasst, wobei das Stahlseil einen Spleiß aufweist, wobei die Spitzen der Außenstränge der ersten Seite des Spleißes an zugehörige Spitzen der Außenstränge der zweiten Seite des Spleißes an Außenstranganschlägen anschlagen, **dadurch gekennzeichnet, dass**
die Spitzen der Außenstränge abgeflacht sind, wobei das Abflachen der Spitzen in Umfangsrichtung in einem Querschnitt der Seilsägeschlaufe an den Anschlägen ausgerichtet ist.

13. Seilsägeschlaufe nach Anspruch 12, wobei die Spitzen der Außenstränge mit einem Kunststoffbogen versehen sind, wobei der Bogen in einem Abschnitt der Außenstränge an den Anschlägen radial nach innen ausgerichtet ist.

14. Seilsägeschlaufe nach einem der Ansprüche 12 bis 13, wobei das Stahlseil einen Kernstrang und sechs Außenstränge umfasst, wobei das Stahlseil einen Spleiß mit einer Spleißlänge, die dem axialen Abstand zwischen den zwei Außenstranganschlägen, die am weitesten voneinander entfernt sind, aufweist, wobei die Außenstranganschläge an axialen Positionen mit einer Schrittlänge Δ, die einem Fünftel der Spleißlänge entspricht, über die Spleißlänge gleichmäßig verteilt sind, wobei ein Anschlag an einer axialen Position vorhanden ist und wobei angrenzende Außenstränge der ersten und zweiten Seite eine gemeinsame Länge aufweisen, die größer als 17×Δ ist.

15. Seilsägeschlaufe nach Anspruch 14, wobei die axialen Positionen der Außenstranganschläge einer Anordnung Δ× (1, 4, 2, 5, 3, 6) oder Δ × (1, 4, 2, 6, 3, 5) oder einer beliebigen Anordnung, die daraus durch Umkehrung, Drehung oder Ergänzung der Reihenfolge abgeleitet ist, entsprechen.

16. Seilsägeschlaufe nach einem der Ansprüche 12 bis 13, wobei das Stahlseil einen Kernstrang und sieben Außenstränge umfasst, wobei das Stahlseil eine Spleißlänge mit einer Spleißlänge, die dem axialen Abstand zwischen den zwei Außenstranganschlägen, die am weitesten voneinander entfernt sind, entspricht, aufweist, wobei die Außenstranganschläge an axialen Positionen mit einer Schrittlänge Δ, die einem Sechstel der Spleißlänge entspricht, über die Spleißlänge axial gleichmäßig verteilt sind, wobei ein Anschlag an einer axialen Position auftritt und wobei angrenzende Außenstränge der ersten und zweiten Seite eine gemeinsame Länge aufweisen, die größer als 23×Δ ist.

17. Sägeseilschlaufe nach Anspruch 16, wobei die axiale Position der Außenstranganschläge einer beliebigen Anordnung gemäß der folgenden Tabelle
| | | | |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |
oder einer beliebigen Anordnung, die daraus durch Umkehrung, Drehung oder Ergänzung der Reihenfolge abgeleitet ist, entspricht.

## Revendications

1. Procédé de production d'une boucle de scie à câble comprenant les étapes suivantes :
- fournir un câble d'acier ayant un toron central et des torons extérieurs, lesdits torons extérieurs étant enroulés en hélice autour dudit toron central, ledit câble d'acier ayant un diamètre extérieur « OD » ;
- couper ledit câble d'acier à une longueur de travail, ladite longueur de travail ayant une première extrémité et une deuxième extrémité ;
- fournir des perles de scie ayant un trou traversant avec un diamètre intérieur « ID », la différence entre ledit diamètre extérieur « OD » et ledit diamètre intérieur « ID » étant inférieure à 1 mm ;
- enfiler lesdites perles de scie sur ledit câble d'acier ;
- former une boucle ayant une longueur de boucle, ladite longueur de boucle étant plus courte que ladite longueur de travail, le chevauchement ayant une longueur de chevauchement ;
- dérouler lesdits torons extérieurs depuis ladite première et ladite deuxième extrémité sur ladite longueur de chevauchement ;
- découper des torons extérieurs correspondants et le toron central de la première et de la deuxième extrémité à des emplacements étalés sur la longueur de chevauchement, lesdits torons se terminant par une pointe ;
- mettre bout-à-bout la pointe du toron central de la première et de la deuxième extrémité au niveau de l'aboutement du toron central ;
- réenrouler les torons extérieurs en position en formant ainsi une boucle fermée dans laquelle les pointes des torons extérieurs de la première et de la deuxième extrémité sont mises bout-à-bout les unes avec les autres au niveau des aboutements du toron extérieur ;
- répartir lesdites perles sur la boucle avec une distance de séparation entre les perles ;
- mouler par injection une gaine polymère entre lesdites perles ;
**caractérisé en ce**
**qu'**au cours de la découpe desdits torons extérieurs, la pointe desdits torons extérieurs est aplatie, l'aplatissement desdites pointes étant orienté circonférentiellement après le réenroulement desdits torons extérieurs en position.

2. Procédé selon la revendication 1, dans lequel, au cours de la découpe des torons extérieurs, la pointe desdits torons extérieurs acquiert une courbure plastique, ladite courbure étant orientée radialement vers l'intérieur après le réenroulement desdits torons extérieurs en position.

3. Procédé selon la revendication 2, dans lequel ladite courbure ne s'étend pas sur plus de cinq fois le diamètre dudit toron extérieur et dans lequel le rayon de courbure de ladite courbure est compris entre la moitié et cinq fois le diamètre dudit toron extérieur.

4. Procédé selon l'une quelconque des revendications 1 à 3, dans lequel ledit câble d'acier présente six torons extérieurs, une longueur d'épissure étant la distance axiale entre les deux aboutements de torons extérieurs qui sont les plus éloignés l'un de l'autre, ladite longueur d'épissure étant inférieure ou égale à ladite longueur de chevauchement, lesdits aboutements de torons extérieurs étant répartis uniformément axialement sur ladite longueur d'épissure à des positions axiales avec une longueur de pas « Δ » égale à un cinquième de ladite longueur d'épissure, un aboutement se produisant à une position axiale et des torons extérieurs adjacents de la première et la deuxième extrémité partageant une longueur commune qui est plus grande que 17 x Δ.

5. Procédé selon la revendication 4, dans lequel la position des aboutements de torons extérieurs correspond à un agencement Δ x (1, 4, 2, 5, 3, 6) ou Δ x (1, 4, 2, 6, 3, 5) ou tout agencement dérivé de ceux-ci par inversion de l'ordre, rotation ou complément.

6. Procédé selon l'une quelconque des revendications 1 à 3, dans lequel ledit câble d'acier présente sept torons extérieurs, une longueur d'épissure étant la distance axiale entre les deux aboutements de torons extérieurs qui sont axialement les plus éloignés l'un de l'autre, ladite longueur d'épissure étant inférieure ou égale à ladite longueur de chevauchement, lesdits aboutements de torons extérieurs étant répartis uniformément axialement sur ladite longueur d'épissure à des positions axiales avec une longueur de pas « Δ » égale à un sixième de ladite longueur d'épissure, deux aboutements ne se produisant jamais à la même position axiale et des torons extérieurs adjacents de la première et de la deuxième extrémité partageant une longueur commune qui est plus grande que 23 x Δ.

7. Procédé selon la revendication 6, dans lequel la position des aboutements de torons extérieurs correspond à tout agencement selon le tableau suivant
| | | | |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |
ou à tout agencement dérivé de celui-ci par inversion de l'ordre, rotation ou complément.

8. Procédé selon l'une quelconque des revendications 4 à 7, dans lequel ladite longueur de pas est un multiple entier de ladite distance de séparation entre les perles.

9. Procédé selon l'une quelconque des revendications 1 à 8, dans lequel la position dudit aboutement de toron central est à l'extérieur de l'étendue desdits aboutements de torons extérieurs.

10. Procédé selon l'une quelconque des revendications 1 à 8, dans lequel la position dudit aboutement de toron central est à l'intérieur de l'étendue desdits aboutements de torons extérieurs.

11. Procédé selon l'une quelconque des revendications 1 à 10, dans lequel lesdits torons extérieurs déroulés présentent un diamètre circonscrit « CD », ledit CD étant compris entre 0,95 et 1,005 fois ledit OD.

12. Boucle de scie à câble comprenant un câble d'acier avec des perles de scie enfilées sur celui-ci, ledit câble d'acier comprenant un toron central et des torons extérieurs, ledit câble d'acier ayant une épissure, les pointes des torons extérieurs du premier côté de ladite épissure étant mises bout-à-bout avec des pointes correspondantes des torons extérieurs du deuxième côté de ladite épissure au niveau d'aboutements de torons extérieurs, **caractérisée en ce que**
lesdites pointes desdits torons extérieurs sont aplaties, l'aplatissement desdites pointes étant orienté circonférentiellement dans une direction transversale de ladite boucle de scie à câble au niveau desdits aboutements.

13. Boucle de scie à câble selon la revendication 12, dans laquelle lesdites pointes desdits torons extérieurs sont pourvues d'une courbure plastique, ladite courbure étant orientée radialement vers l'intérieur dans une section desdits torons extérieurs au niveau desdits aboutements.

14. Boucle de scie à câble selon l'une quelconque des revendications 12 et 13, dans laquelle ledit câble d'acier comprend un toron central et six torons extérieurs, ledit câble d'acier ayant une épissure avec une longueur d'épissure égale à la distance axiale entre les deux aboutements de torons extérieurs qui sont les plus éloignés l'un de l'autre, lesdits aboutements de torons extérieurs étant répartis uniformément axialement à des positions axiales sur ladite longueur d'épissure avec une longueur de pas « Δ » égale à un cinquième de la longueur d'épissure, un aboutement étant présent à une position axiale et des torons extérieurs adjacents du premier et du deuxième côté partageant une longueur commune qui est supérieure à 17 x Δ.

15. Boucle de scie à câble selon la revendication 14, dans laquelle les positions axiales des aboutements correspondent à un agencement Δ x (1, 4, 2, 5, 3, 6) ou Δ x (1, 4, 2, 6, 3, 5) ou tout agencement dérivé de ceux-ci par inversion de l'ordre, rotation ou complément.

16. Boucle de scie à câble selon l'une quelconque des revendications 12 et 13, dans laquelle ledit câble d'acier comprend un toron central et sept torons extérieurs, ledit câble d'acier ayant une épissure avec une longueur d'épissure égale à la distance axiale entre les deux aboutements de torons extérieurs qui sont les plus éloignés l'un de l'autre, lesdits aboutements de torons extérieurs étant répartis uniformément axialement à des positions axiales sur ladite longueur d'épissure avec une longueur de pas « Δ » égale à un sixième de la longueur d'épissure, un aboutement étant présent à une position axiale et des torons extérieurs adjacents du premier et du deuxième côté partageant une longueur commune qui est plus grande que 23 x Δ.

17. Boucle de scie à câble selon la revendication 16, dans laquelle la position axiale des aboutements de torons extérieurs correspond à tout agencement selon le tableau suivant
| | | | |
|---|---|---|---|
| A | (1,4,6,2,5,3,7) | I | (1,5,2,4,6,3,7) |
| B | (1,4,6,2,7,3,5) | J | (1,5,2,4,7,3,6) |
| C | (1,4,6,3,5,2,7) | K | (1,5,3,6,2,4,7) |
| D | (1,4,6,3,7,2,5) | L | (1,5,3,6,4,2,7) |
| E | (1,4,7,2,5,3,6) | M | (1,5,3,7,2,4,6) |
| F | (1,4,7,2,6,3,5) | N | (1,6,2,4,7,3,5) |
| G | (1,4,7,3,5,2,6) | O | (1,6,3,5,2,4,7) |
| H | (1,4,7,3,6,2,5) | P | (1,6,4,2,5,3,7) |
ou à tout agencement dérivé de celui-ci par inversion de l'ordre, rotation ou complément.
